# EUROPEAN PATENT SPECIFICATION

(11) **EP 2 654 520 B1**
(45) Date of publication and mention of the grant of the patent: **06.12.2017**
(21) Application number: 11815854.2
(22) Date of filing: 23.12.2011
(51) Int. Cl.: A47J 27/21

(54) **HEATED LIQUID VESSELS AND ELECTRICAL APPLIANCES**
BEHEIZTE FLÜSSIGKEITSBEHÄLTER UND ELEKTROGERÄTE
RÉCIPIENTS DE LIQUIDE ET APPAREILS ÉLECTRIQUES CHAUFFÉS

(30) Priority: 23.12.2010 GB 201021926; 18.02.2011 WO PCT/GB2011/000231; 21.04.2011 GB 201106827; 25.05.2011 GB 201108826; 27.07.2011 GB 201112936; 18.08.2011 GB 201114267; 22.09.2011 GB 201116404; 24.11.2011 CN 201120473947 U
(43) Date of publication of application: 30.10.2013
(73) Proprietor: Otter Controls Limited, Derbyshire SK17 7LF (GB)
(72) Inventor: SMITH, David, Macclesfield Cheshire SK10 2UU (GB); HADFIELD, Robert, Stockport Cheshire SK6 6DF (GB); GAETA, Antonio, Buxton Derbyshire SK17 6RA (GB); WRIGHT, Peter, Leek Staffordshire ST13 6LN (GB); SO, Richard, Macclesfield Cheshire SK10 3GH (GB); HUNT, Andrew, Bowden Cheshire WA14 3FD (GB); SHERRATT, Mark, Derbyshire SK17 6NX (GB); LINDLEY, Richard, Nr Buxton Derbyshire SK17 0BS (GB)
(74) Representative: Cross, James Peter Archibald
(86) International application number: PCT/GB2011/052590
(87) International publication number: WO 2012/085602

(56) References cited:
- DE-U1-202009 017 021
- GB-A- 2 406 975
- GB-A- 2 437 914

## Description

### Field of the Invention

The present invention relates to vessels for heated liquid, to electrical appliances and components therefor. Some aspects of the invention are directed to cordless electrical appliances. In particular most aspects are directed towards producing a more ecologically sustainable product by optimising assembly time, material, packaging and transport issues.

### Background of the Invention

There is a constant commercial pressure in the domestic appliance industry to lower the price or reduce the costs of small domestic appliances.

However the proprietor understand that the issue is greater than the just the cost of the materials or components and have realised that there is a need to reduce the impact or cost of domestic appliances through interrelated factors, including commercial, logistical and the environmental aspects. Invariably, reducing the mass or volume of material used in an appliance will have a positive effect on the material price of the appliance. However, there are also other aspects for example rework, shipping and packing whereby innovation can make great strides in reducing costs. To achieve a reduction in material costs it is necessary to challenge the established prior art methods and ideology.

Document GB-A-2406975 discloses a cordless base assembly according to the preamble of independent claim 1.

### Statements of the Invention

According to a first aspect of the present invention, there is provided a cordless base assembly according to claim 1.

Embodiments of the present invention include a 360° cordless electrical base that can be stored within its associated cordless electrical appliance and an associated cover (separate or separable portion(s)) for the cordless electrical base that may be stored within, or adjacent to, above, below or at the side of the associated cordless electrical appliance thus allowing more efficient packing.

The associated cordless appliance may be a liquid heating appliance and the cordless base may be stored within the liquid heating reservoir.

The cordless electrical base may include any one of, or a combination of a cordless electrical base cover, a skirt to provide access for the power cable and to shroud the electrical connections, an electrical cable grip, drainage feature and feet or other support means. Advantageously, the central portion is arranged to be unstable on a surface when the separate or separable portion is not attached to the central portion. The central portion may have at least one projection extending downwardly from the base of the central portion so as make the central portion unstable on a surface when the separate or separable portion is not attached to the central portion. The at least one support member may moveable from a stowed position to a deployed position in which the support member projects outwardly from the central portion to allow the base to be stored or storable within the appliance when the at least one moveable support member is in a stowed position.

In an embodiment of the invention, there is provided a cordless base comprising a central cordless connector and a detachable annular portion into which the central portion fits. The central cordless connector may fit within an associated cordless appliance. The annular portion may be folded or disassembled to fit within the associated cordless appliance, or may fit an external part of the appliance, for compact packing.

### Brief Description of the Drawings

There now follows, by way of example only, a detailed description of preferred embodiments of the present invention, with reference to the Figures identified below.
Figure 1 is a schematic cross-section of a cordless liquid heating appliance in an embodiment of the invention.
Figures 49a and 49b are plan views of a cordless base with a moveable appliance support, respectively in deployed and stowed positions.
Figures 49c and 49d are perspective views corresponding to Figures 49a and 49b respectively.
Figure 49e is a schematic cross-section of a cordless kettle, with the cordless base of Figures 49a to 49d in stowed position, stored within the reservoir of the kettle.
Figures 49f and 49g are plan views of an alternative cordless base with more than one rotatable appliance support, respectively in deployed and stowed positions.
Figures 49h and 49i are plan views of another alternative cordless base with rotatable appliance supports that nest within the perimeter of the base, shown respectively in deployed and stowed positions.
Figures 49j and 49k are perspective views corresponding to Figure 49h.
Figure 49l is an exploded view of a cordless kettle with a cordless base and a base cover in a first embodiment.
Figure 49m is an exploded view of a cordless kettle with a cordless base and a base cover in a second embodiment.
Figure 49n is a perspective view of a two-part base cover in a third embodiment.
Figure 49o is a perspective view of a hinged base cover in a fourth embodiment.
Figure 49p is a schematic cross-section of a cordless kettle, with a cordless base and the hinged base cover of the fourth embodiment, stored within the reservoir of the kettle.
Figure 49q is a schematic cross-section of a cordless kettle, with a cordless base stored within the reservoir.
Figure 49r is a schematic cross-section of the top of the cordless kettle, with a single-part base cover of a fifth embodiment stored on top of the kettle.
Figure 49s is a schematic cross-section of the top of the cordless kettle, with a single-part base cover of a sixth embodiment stored on top of the kettle.
Figures 49t and 49u are perspective views of a cordless base with cable storage features.
Figure 49v is a cross-section of a base with a base cover fitted thereto.
Figure 49w is a plan view of a kettle stored within a box.
Figure 49x is a schematic plan view of a kettle with a lid and handle assembly stored within.
Figure 49y and 49z are isometric views of a further embodiment of a cordless base and corresponding cover, respectively separated from and connected to the cordless base.
Figure 49za is an isometric view of a cordless base cover and appliance of Figures49y and 49z in the stowed position.

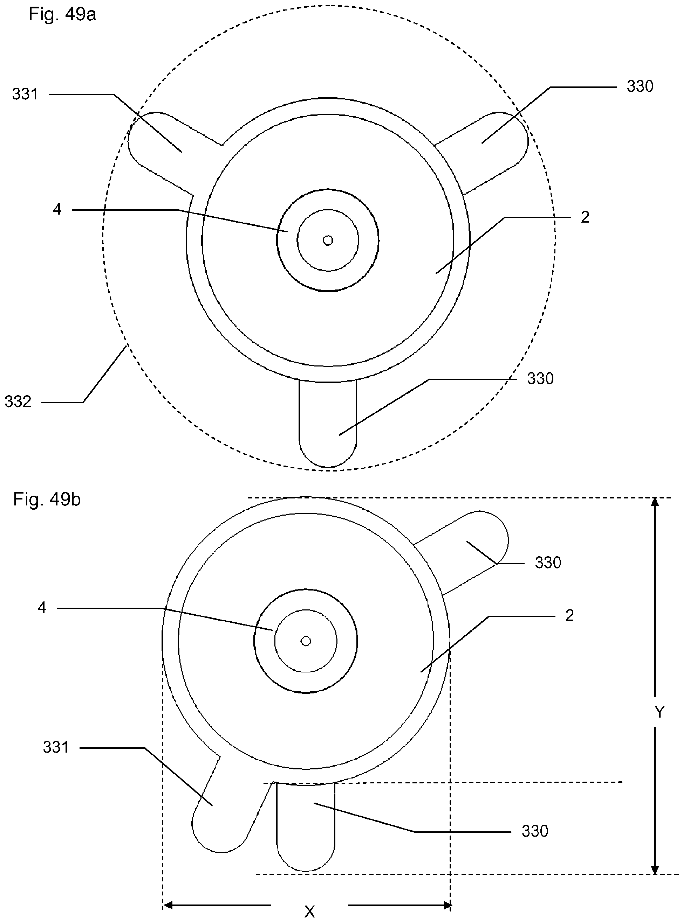

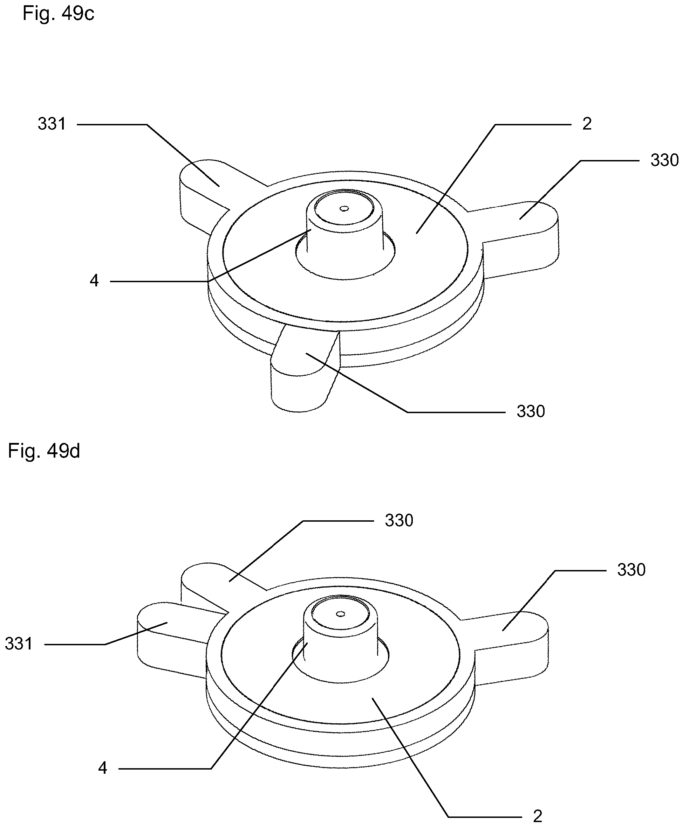

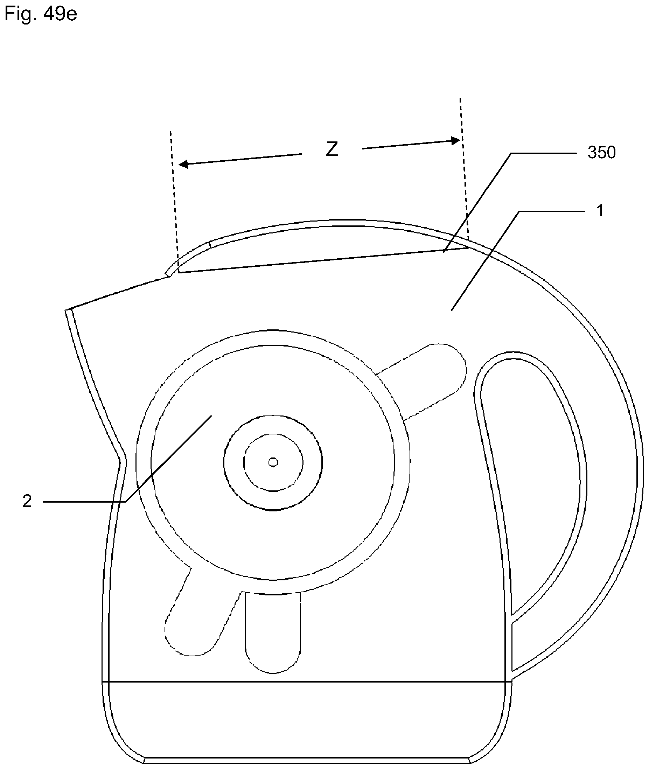

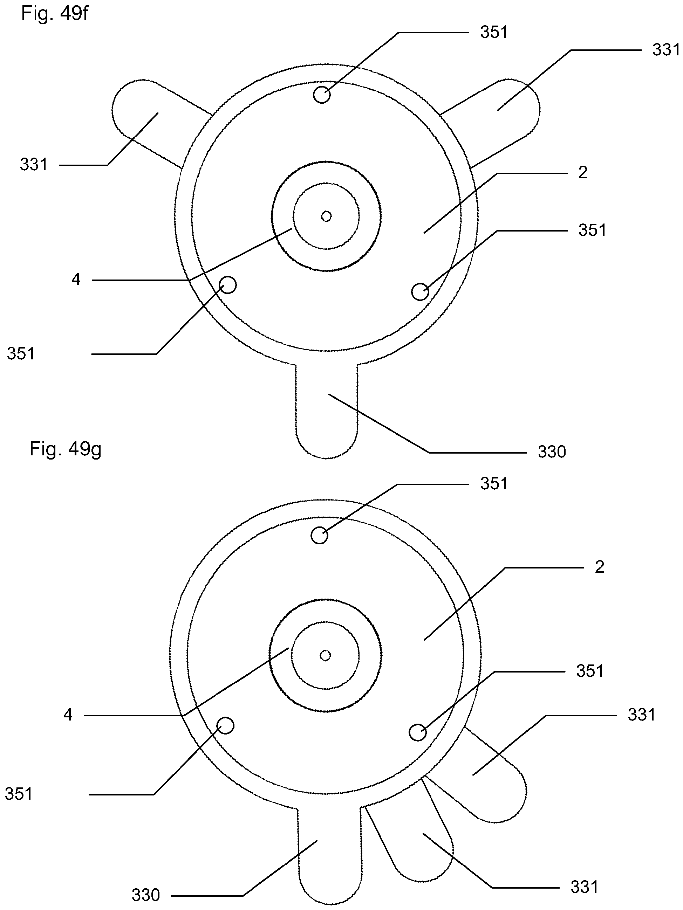

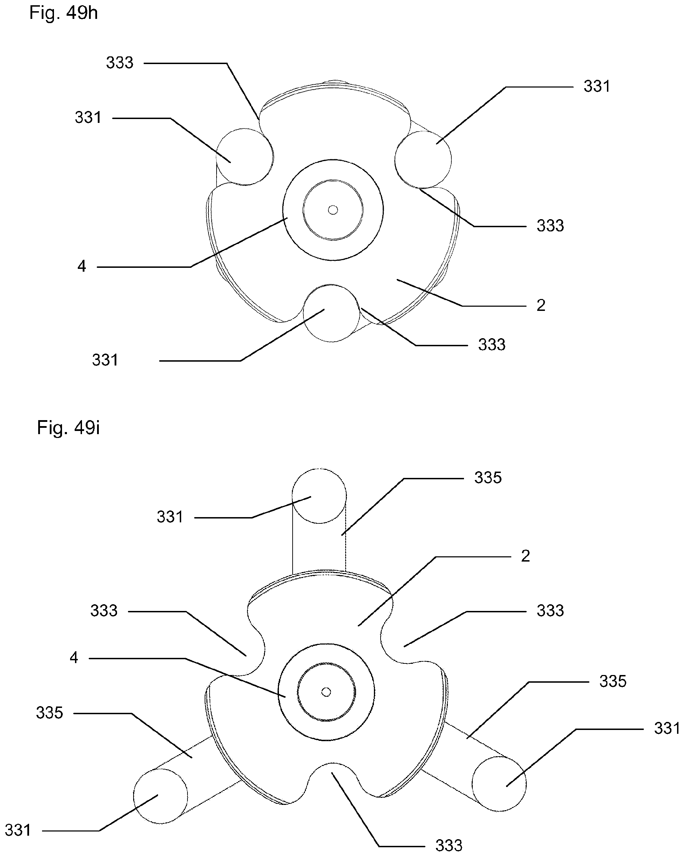

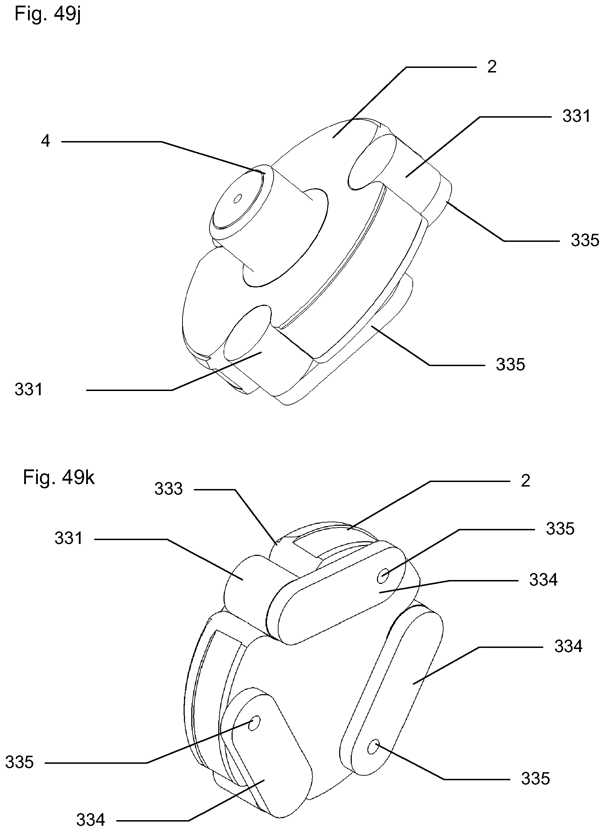

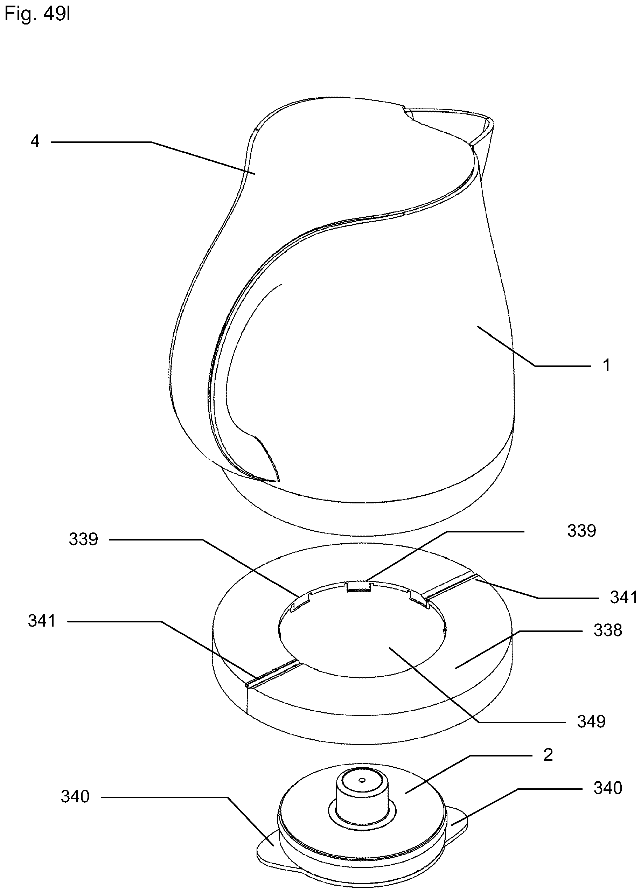

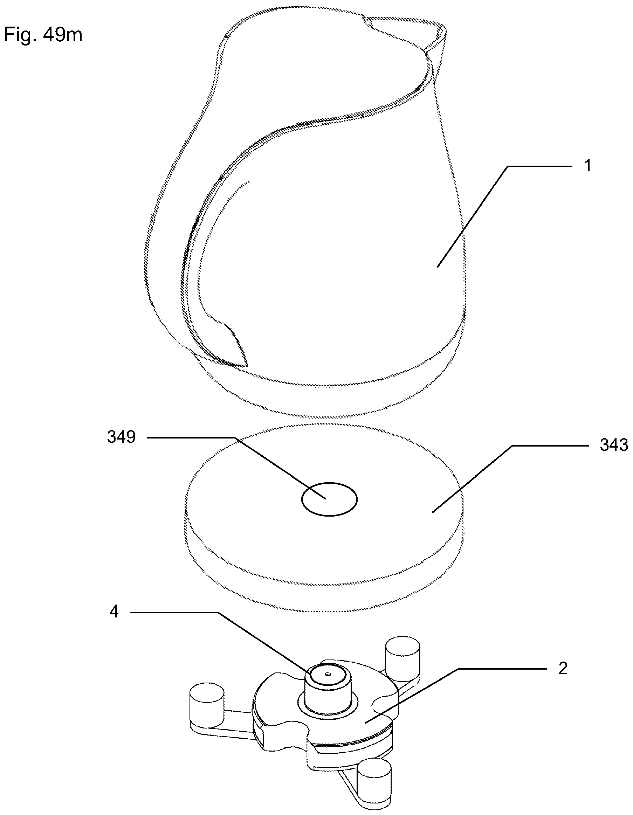

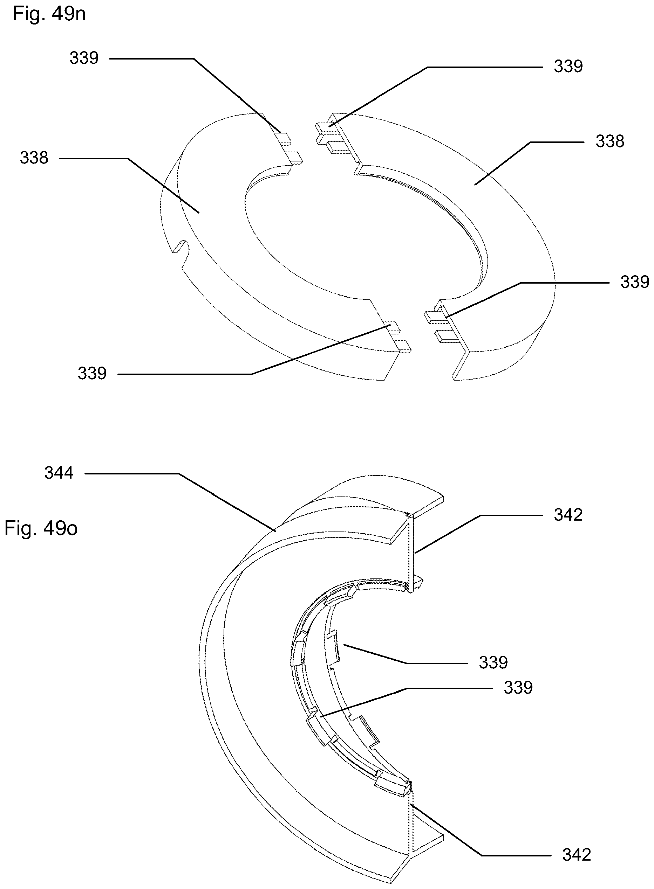

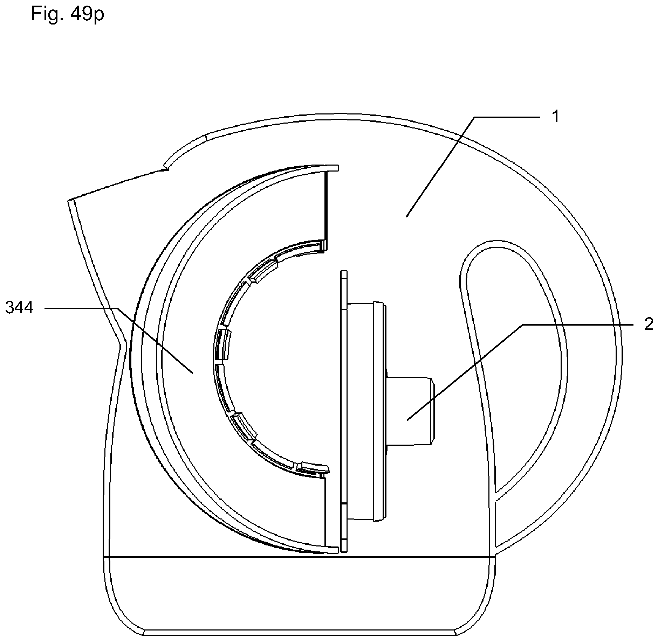

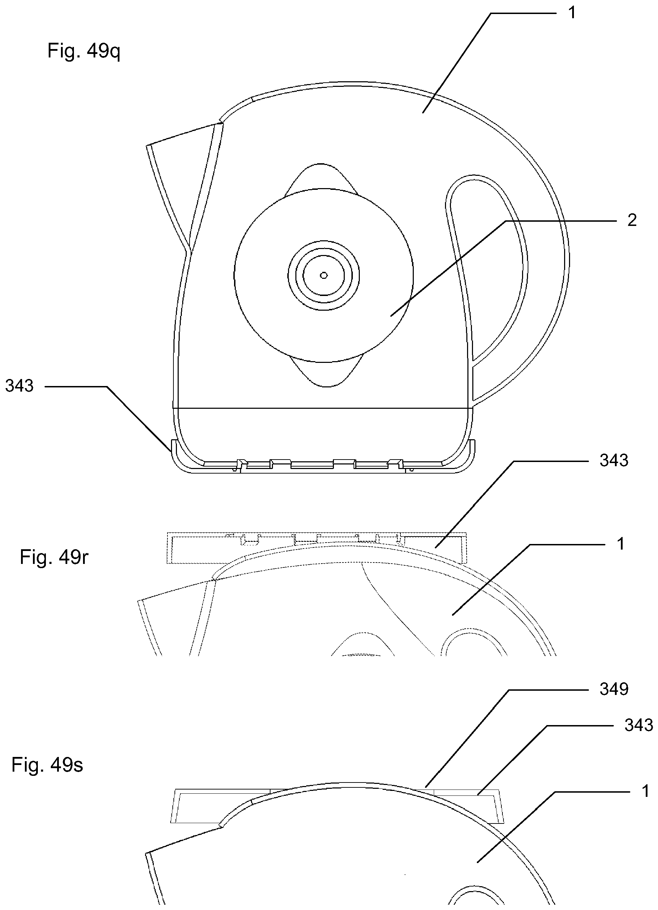

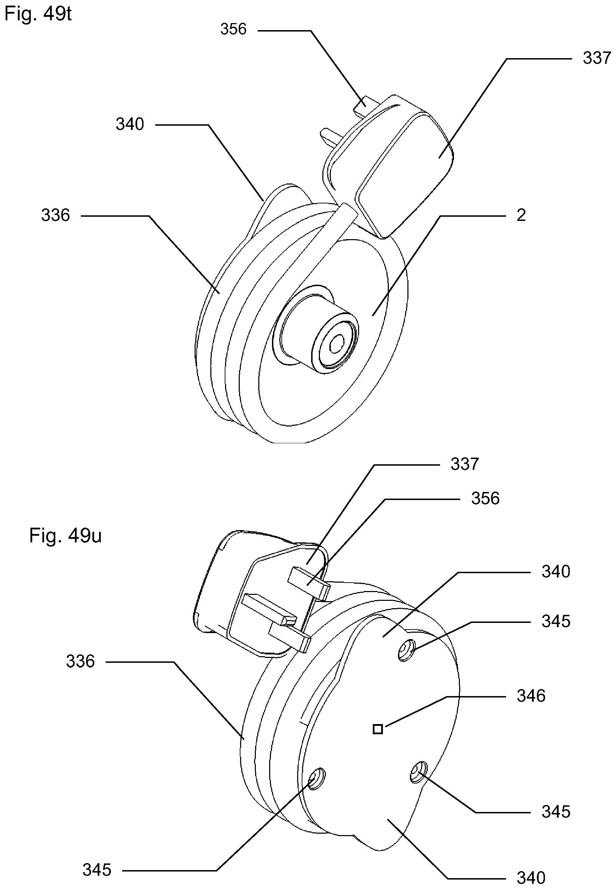

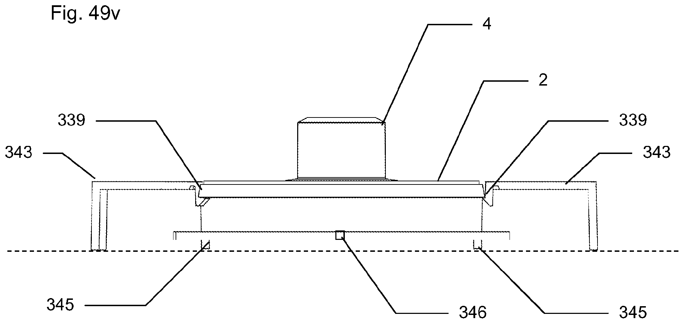

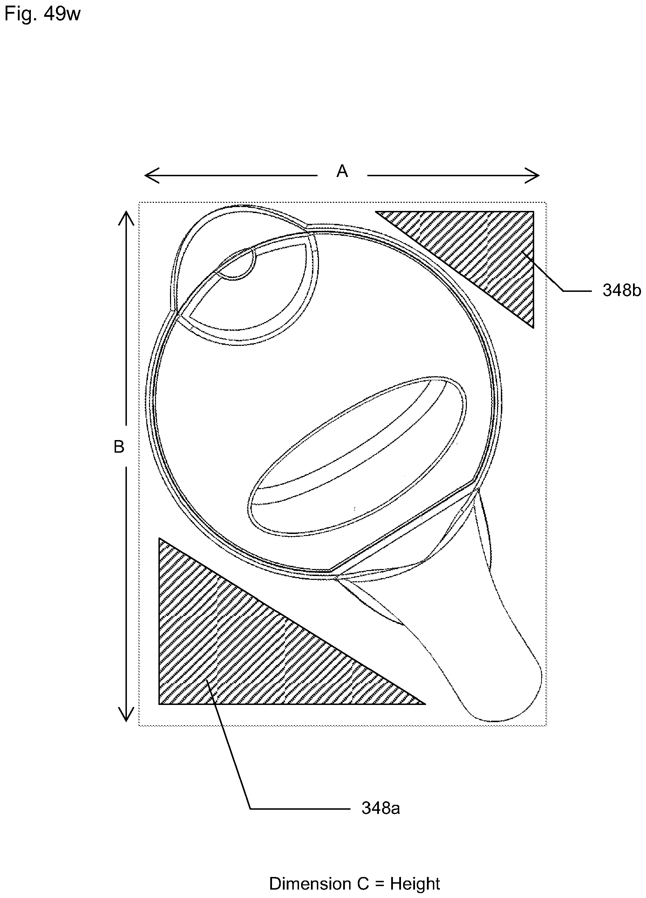

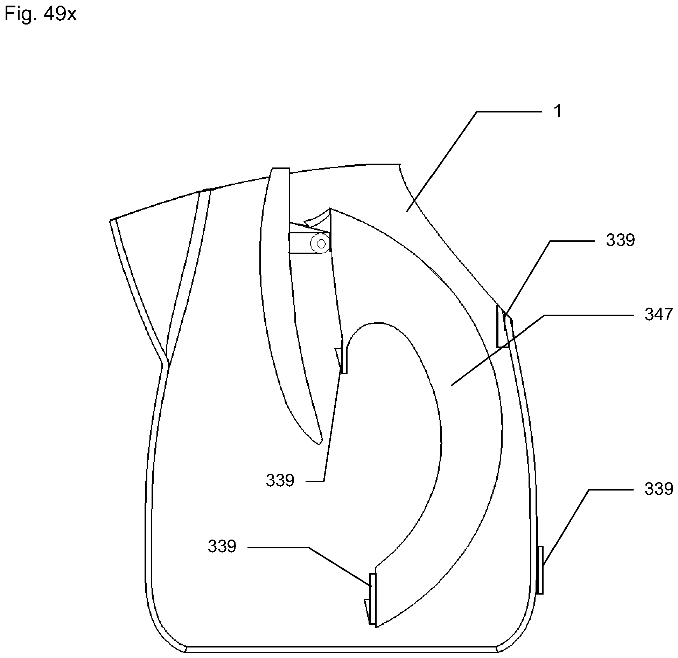

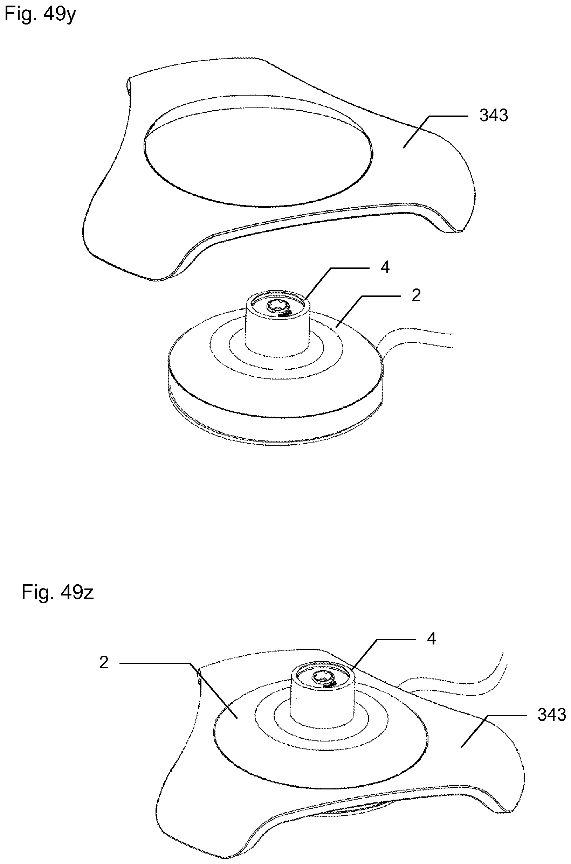

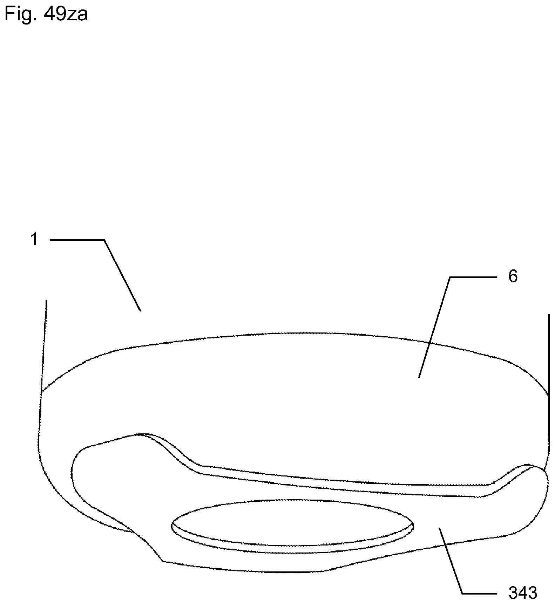

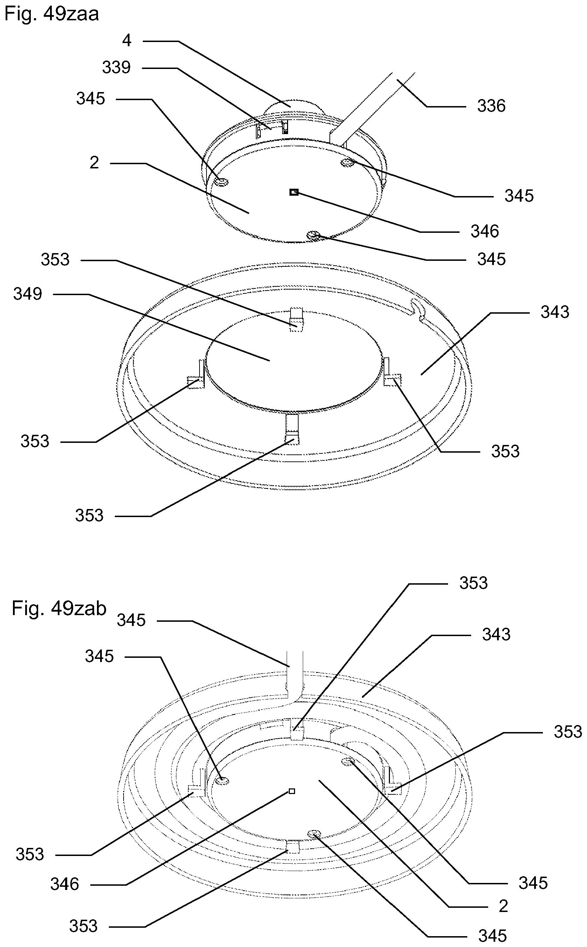

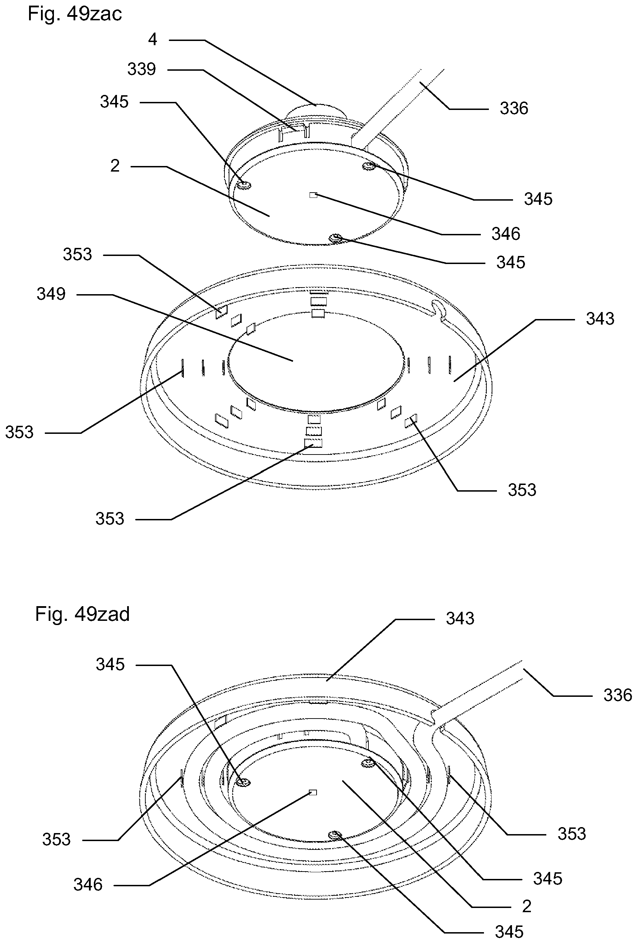

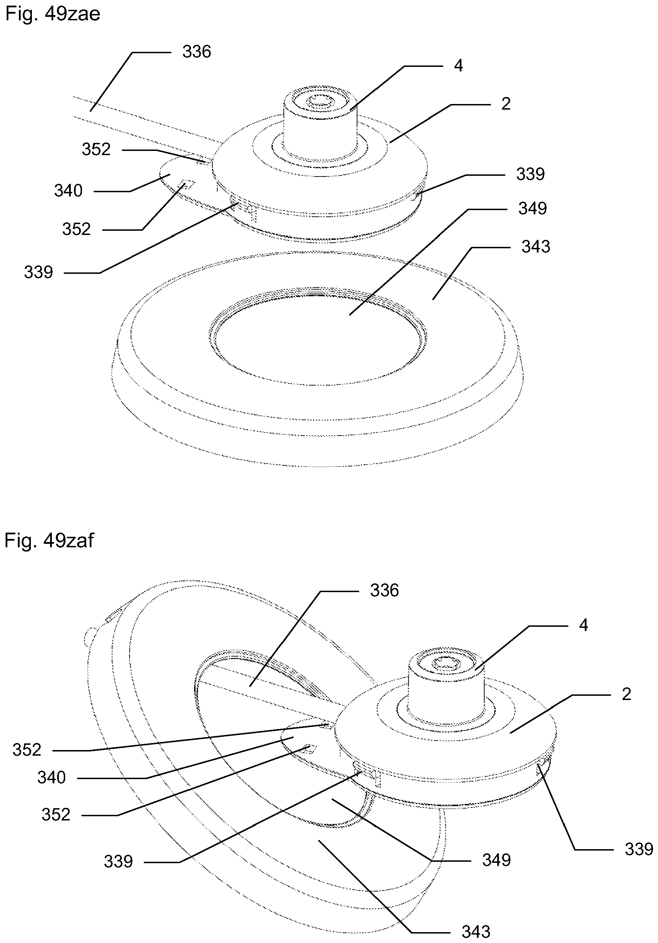

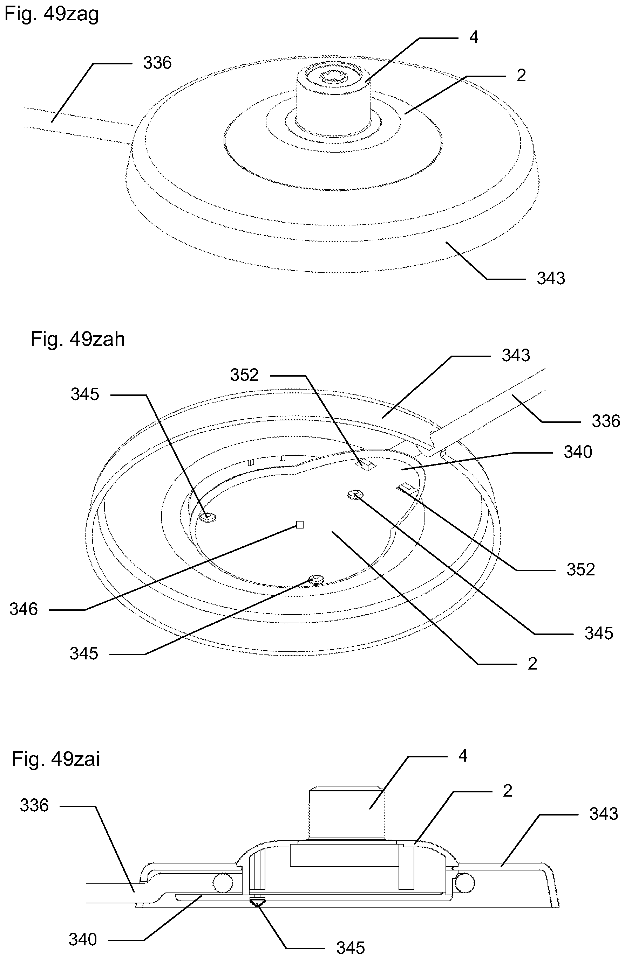

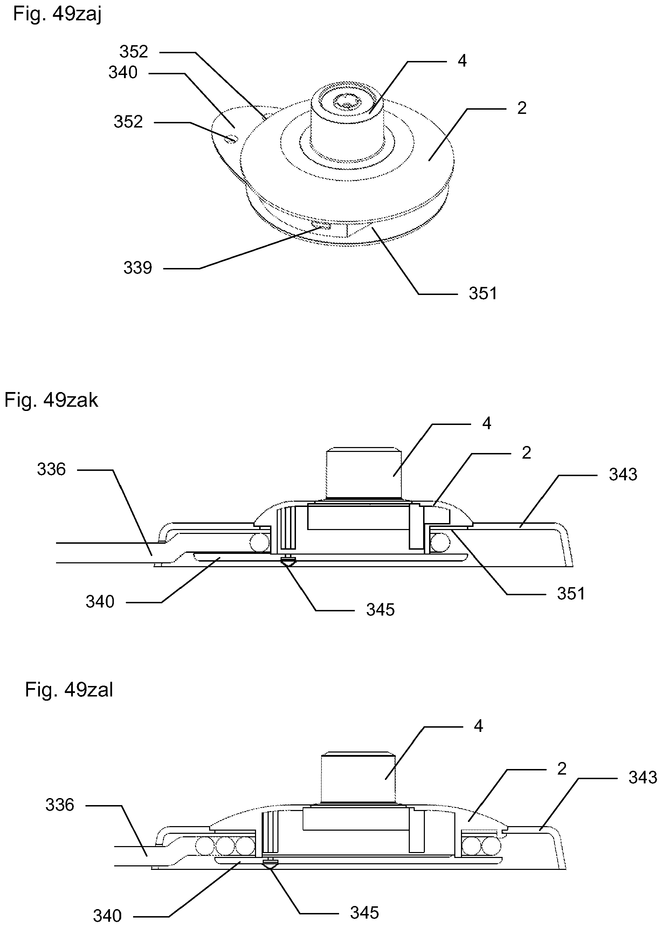

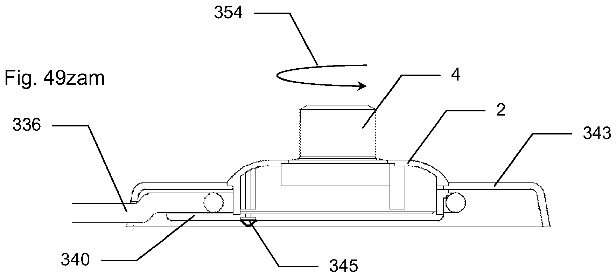

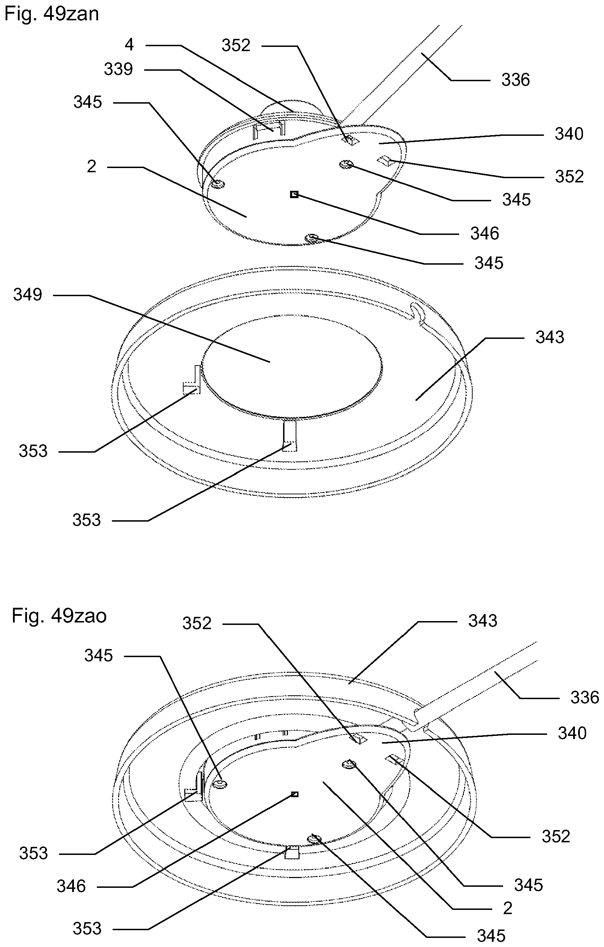

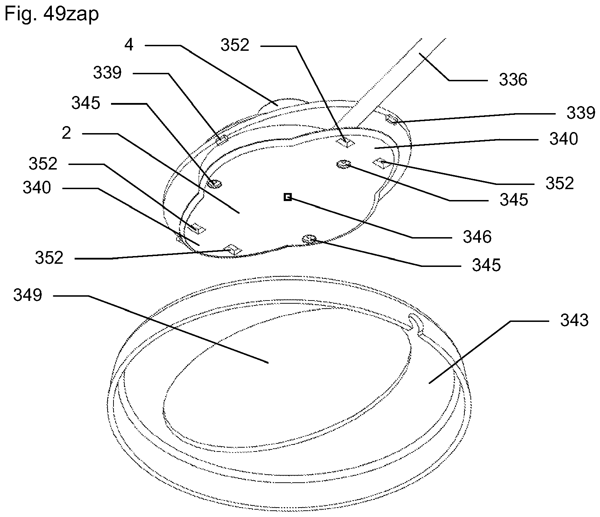

Figure 49zaa is an exploded underside view of a further embodiment of a cordless base and cover with cable storage features.
Figure 49zab is an assembled underside view of the cordless base and cover of Figure 49zaa with the cable in a stowed position.
Figure 49zac is an exploded underside view of a further embodiment of a cordless base and cover with alternative cable storage features.
Figure 49zad is an assembled underside view of the cordless base and cover of Figure 49zac with the cable in a stowed position.
Figures 49zae and 49zaf are exploded isometric views of a further embodiment of a cordless base and cover illustrating the assembling thereof.
Figure 49zag is an isometric view of the assembled cordless base and cover of Figures 49zae and 49zaf.
Figure 49zah is an assembled underside view of the cordless base and cover of Figures 49zae to 49zag with the cable in a stowed position.
Figure 49zai is a cross-section of cordless base and cover of Figures 49zae to 49zah and with the cable in a stowed position.
Figure 49zaj is an isometric view of a further embodiment of a cordless base with alternative cable storage features.
Figure 49zak is a cross-section of cordless base and cover of Figure 49zai with the cable in a stowed position.
Figure 49zal is a cross-section of a further embodiment of a cordless base and cover with the cable in a stowed position.
Figure 49zam is a cross-section of cordless base and cover of Figures 49zae to 49zai with cable winding features.
Figure 49zan is an exploded underside view of a further embodiment of a cordless base and cover with alternative cable storage features.
Figure 49zao is an assembled underside view of the cordless base and cover of Figure 49zan with the cable in a stowed position.
Figure 49zap is an exploded underside view of a further embodiment of a cordless base and cover with alternative cable storage features.

### Detailed Description of the Embodiments

In the following description, functionally similar parts carry the same reference numerals between different embodiments. The drawings are intended to be schematic, and dimensions and angles may not be determined accurately from them unless otherwise stated.

The following description discloses a combination of measures that will advantageously impact on costs and price in all their aspects.

To avoid duplication of the background, the description refers to lowering prices, reducing material costs and reducing size etc. but in doing so is taking into consideration each of the above aspects that may be relevant to the specific disclosure.

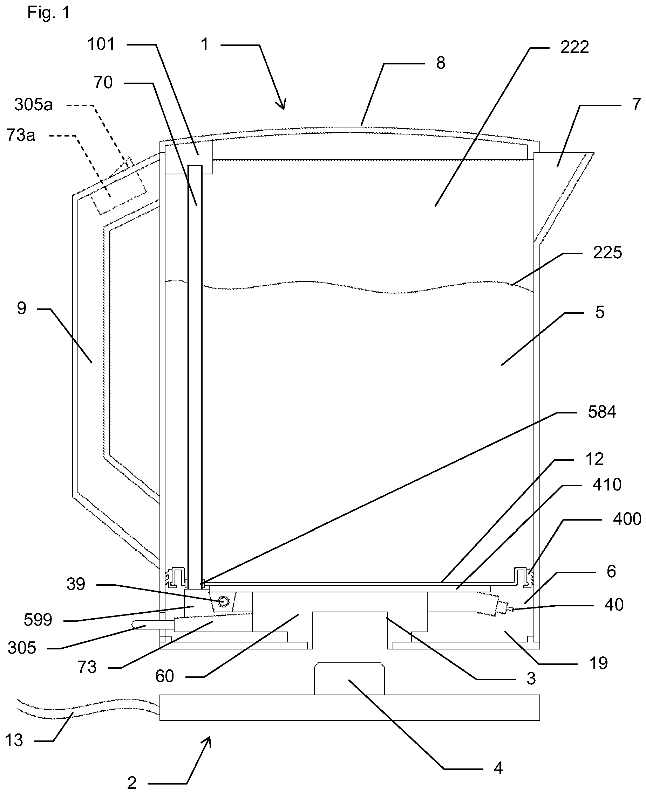

The solutions are presented in separate sections of this document and each of these sections will include a brief introduction to the specific problem.
At least some embodiments may rely on, or refer to, or relate to, the features of Figure 1 by reference to the figure reference numerals in Figure 1.

In the following description the electrical power supply lead into the base 2 or appliance 1 may be described by the term cord (13) and the term cable (336). It is intended that each term has a similar or equivalent meaning.

In the case of the cordless base 2 then 'stow' or 'store' or 'secure' or derivatives thereof may be used as terms to describe the cable 336 when wrapped or partially wrapped around the cordless base 2 within the packaging or when in use. It is intended that each term has similar or equivalent meaning.

In the case of the description and claims the term part and portion are intended to have equivalent meaning.

In the case of the description and claims when describing one part of an electrical connecting or switching means the terms discrete contact, contact portion and contact area are intended to have equivalent meaning.

In the case of the description and claims when describing one part of a heating element the terms heat transfer plate and heat diffuser plate are intended to have equivalent meaning.

Many of the embodiments refer to electric water heating appliances such as kettles and figure 1 illustrates a schematic example of such a kettle.

In this example, the kettle is a cordless kettle comprising a vessel body 1 and a power base 2 having respective body and base cordless connectors 3 and 4, such as 360° cordless connectors of the type described in patent publication WO-A-94/06285 and/or as sold by Otter Controls Ltd. under for example the CS4/CS7 Series (power base socket) and the A1, CP7 or CP8 (appliance plug) references. The power base 2 is connectable by a power cord 13 to an electrical power outlet (not shown).

The jug kettle may include an electronic (not shown) or an electro mechanical control 60 or 520 (not shown) for example the proprietor's A1 series integrated 360° control. The electro mechanical control 60 may include an integral steam switch 73 or alternatively a discrete steam switch 73a may be provided, within, for example, the handle 9.

The vessel body 1 comprises a reservoir 5 for containing liquid to be heated, lid 8, spout 7, handle 9 and a base section 6 having a sub-base 19, which forms the bottom surface of the vessel body 1. A steam tube 70 and steam cap 101 may be provided. The steam tube communicates from the area above the water level 225 to the steam switch 73 or 73a. The steam tube may be formed, for example as part of the handle 9 or reservoir wall 5 or as illustrated as a separate tube. In the case that the steam tube passes through the element then a suitable seal 584 and additional steam guide 599 may be provided. The vessel body 1 may be any shape and formed, for example, from plastic, glass, metal or ceramic. Liquid is heated by an element plate 12 which may form the base of the reservoir 5. The element plate 12 includes a heating means and is connected to receive electrical power via the connector 3. The heating means may comprise a sheathed element 39 as illustrated or may comprise a thick film element and/or diecast element arrangement. There may be provided a heat transfer means 410 and the plate 12 may be composed of stainless steel and/or other suitable substrate. As illustrated the element plate 12 may be sealed into the vessel body 1 using the Easifix® sealing arrangement as described in WO-A-99/17645 or alternative sealing means may be employed, for example gluing welding or clamping.

At least some embodiments of the present invention are applicable to liquid heating vessels having a heating element immersed in the water, rather than an element on the underside of the vessel.

At least some of the embodiments are applicable to other liquid heating appliances which may include teamakers, milk frothers, vending machines food processors, blenders, irons, wasserkochers, coffee and espresso makers, juicers, smoothie makers, pans, soup makers, sauce makers, steamers, chocolate fountains, fondues, slow cookers, vacuum pots etc.. It will be appreciated that the above list is not exhaustive.

### Cordless Appliance Packing

In a cordless electrical appliance, the appliance proper includes a cordless electrical connector that is operable to cooperate with a corresponding cordless electrical connector on a power base. Thus, when the appliance proper is mounted on the power base, power may be supplied to the appliance proper. Such arrangements allow a power base to be connected to a domestic power supply (such as by a plug), whilst further allowing the appliance proper to be removed from the base for various operations, such as dispensing heated liquid from a cordless liquid heating appliance. The above types of cordless electrical connectors have also found use on other domestic appliances, such as food processors, blenders, milk frothers, coffeemakers and the like. This arrangement provides an advantage that the processed/blended food can be more easily dispensed by a user.

360° cordless electrical connectors, as described for example in WO-A-94/06185, allow the appliance proper to be rotated freely relative to the power base, so that the appliance proper may be positioned on the power base with any azimuthal orientation.

Published applications GB-A-2472631 and GB-A-2448767 put forward improvements to reduce the overall manufacturing and transport costs of small appliances, but still further improvements need to be made.

It is known that in immersed element kettles and jugs, the packaging or gift box may be reduced in size by placing the complete cordless base within the appliance, thus enabling more gift boxes to be loaded in a container, and resulting in a lower 'per unit' transport cost.

In the following description the electrical power supply lead into the base 2 or appliance 1 may be described by the term cord (13) and the term cable (336). It is intended that each term has a similar or equivalent meaning.

In the case of the cordless electrical base 2 then 'stow' or 'store' or 'secure' or derivatives thereof may be used as terms to describe the cable 336 when wrapped or partially wrapped around the cordless electrical base 2 within the packaging or when in use. It is intended that each term has similar or equivalent meaning.

In the case of the description and claims the term part and portion are intended to have equivalent meaning.

With 360° cordless electrical appliances, the cordless base generally has the same, or larger diameter than the appliance, in which case the complete cordless electrical base is too large to fit within the appliance and is subsequently packaged outside the appliance, with the result that the packaging or gift box is made larger to accommodate this.

The overall height of a typical 360° cordless electrical base, including the height of the connector, is generally between 30 and 40 mm, with the base moulding part typically being between 15 and 25 mm deep. The minimum height of the base moulding towards the perimeter can be as low as 10 mm (dictated by the thickness of the cable and cable inlet in the moulding); however the moulding will still tend to increase in height towards the centre to accommodate the connection of electrical conductors, drainage features etc. Therefore, for all practical purposes, 15 mm can be regarded as the minimum overall depth of the moulding.

In the prior art methods of packaging, the cordless electrical base may be positioned below the appliance with the mating plug and socket fully engaged, in which case the gift box height is increased by the height of the base moulding. In other instances the cordless electrical base may be positioned above the appliance, where the full height of the cordless base and connector needs adding to the box height. Therefore, if it were possible to position the cordless electrical base within the appliance, then this would reduce the height of the gift box by between 15 and 40 mm.

Typically a gift box with the cordless electrical base packaged above or below the appliance would have dimensions of 250 mm high by 190 mm wide by 170 mm deep and reducing the height by 15 to 40 mm would reduce the volume of the box by between 6% and 15%.

Alternatively, in the prior art, the cordless base may be packaged at an angle across a corner of the gift box (i.e. to one side of the appliance) and, to accommodate this, the gift box will need to be made broader or wider or both.

Typically a gift box, with the cordless base packaged at an angle across a corner of the box, would have dimensions of 220 mm high by 220 mm wide by 170 mm deep and reducing the width by 15 to 30 mm would reduce the volume of the box by between 7% and 14%.

The following embodiments include improvements to the packaging of a cordless base within the appliance, whereby the volume of the gift box is reduced significantly and typically between 6 and 15 %. These embodiments are applicable to any of the cordless appliance embodiments described herein, except where obviously incompatible.

The embodiments encompass:
Cordless electrical bases that are small enough to fit within the cordless electrical appliances in a stowed position, and then configured to a deployed position when removed from the inside the appliance. These embodiments are provided with a separate cover in use.

Cordless electrical bases that are small enough to fit within the cordless electrical appliances and then provided with a separate cover in use.

Figures 49a to 49k illustrate examples in which two or more appliance supports 330 and 331 are positioned around the central portion or perimeter of a small diameter cordless base 2. As illustrated, the centre part of the cordless electrical base 2 is circular however in other examples the cordless electrical base 2 may take other shapes, for example, ovoid or triangular. The actual dimensions of the cordless electrical base 2 and appliance supports 330 and 331 cannot be determined in isolation from the appliance body. What has been determined, however, is that the minimum cross section dimension 'X' of the plan view of the cordless electrical base 2 needs to be less than the minimum dimension 'Z' of an aperture 350 in the appliance body 1. Furthermore the maximum dimension 'Y' between the extremities of the supports 330 and 331 should not impede the cordless electrical base 2 fitting inside the appliance body 1. It is likely that the relationship between the shape and size of the appliance body 1 and the cordless electrical base 2 will be complex, particularly as the cordless electrical base 2, including the appliance supports, may be presented or positioned at an angle, so that specifying a position for a minimum internal dimension of the appliance will be not be possible. However, for example, in its simplest form, it may be specified that the maximum dimension 'X', when the cordless electrical base 2 is tilted or at an angle in the appliance 1, would need to less than the internal height of the appliance and the maximum dimension 'Y' of the cordless electrical base 2 when tilted at the same angle will need to be less than the internal width of the appliance, such as of the reservoir 5.

The cordless electrical base 2 may include one or more additional appliance supports 351 which may be positioned opposite the appliance supports 330 and 331 on the surface of the central part of the base moulding so that the appliance 1 may be better supported. The cordless electrical base 2 may also include additional feet 345 to assist in supporting the weight of the appliance in use. The feet 345 may also provide a gap below the base 2 so that, in conjunction with drainage holes 346 for example, they may enable any water spilled on the connector 4 or base 2 to be safely drained away from beneath the base 2.

In the example shown in Figure 49a it can be seen that the 'footprint' area of the cordless electrical base 2, including three supports 330 and 331 in their extended position, is considerably less than the footprint 332 of a standard 360° cordless electrical base in which case the cordless electrical base 2 may fit inside an appliance without the need for any of the appliance supports to be movable or rotatable. However where the appliance body 1 is smaller as illustrated in Figure 49e, then it may be necessary to provide at least one movable or rotatable appliance support 331. In other appliances it may be necessary to provide the cordless electrical base 2 with more than one movable or rotatable appliance support 331 as illustrated in Figures 49f and 49g.

For the purposes of clarification 'stowed' may be used as a term to describe any part or component that is positioned within a package or gift box and 'deployed' may be used to describe any part or component that has been assembled or positioned for use after unpacking from the package or gift box.

Figures 49h to 49k illustrate a further example where two or more movable supports 331 are connected via legs 334 which rotate about pivot points 335. The supports may fit within nests 333 so that when in the stowed position they fit within the outside dimension of the cordless electrical base 2, so optimising the minimum dimension 'Y' required within the appliance body 1.

The movable supports 331 and/or legs 334 may be mechanically interconnected/interlinked so that rotating one appliance support 331 would automatically rotate the other supports 331. Each of the movable supports 331 and or cordless electrical base 2 may also include some form of locking mechanism, not shown, so that the supports 331 and 333 do not move during use when deployed.

In a further example, the supports 331 and/or legs 334 may be detachable from the cordless electrical base 2, for separate storage within or around the appliance or alternatively may slide out from beneath the cordless electrical base 2 and may optionally include click fits or other locking means for releasably locking in the deployed position.

In a further example, the cordless electrical base 2 may be made smaller in diameter than the vessel body 1, without the need for any additional support or cover, and an aperture in the vessel body 1 may be made large enough for the cordless electrical base 2 to pass into the vessel body 1 for storage. However, this example would be less stable than the examples described above, and may require the vessel body 1 to have a tapered sub-base 9 so that the bottom of the vessel body 1 matches the size of the cordless electrical base 2.

The cordless electrical base 2 may be provided with at least one cable storage feature 340, for example, as illustrated in Figures 49t and 49u, that may act as an aid for storage of a cable 336 in transit and/or in use. The cable storage features 340 or other part of the cordless electrical base 2 may also include apertures 352 of corresponding size, shape and spacing to the cross section of pins 356 of the appliance plug 337 so that at least one of the pins 356 may be inserted into an aperture 352 to secure the plug 337 during transit. In alternative examples there may be provided for example a disposable cardboard or plastic frame (not shown) about which the cable 336 and/or plug 337 may be secured for transit.

In other examples the cordless electrical base 2 and a proportion of the cable 336 may be packaged within the appliance 1 with the remainder of the cable 336 and the plug 337 passing through the spout (not shown) and packaged on the outside of the jug in, for example, the space 348b shown in Figure 49w. Advantageously this may also help prevent either the plug 336 or the inside of the appliance 1 becoming damaged during transit and it will also indicate to the user that the cordless base 2 is positioned within the jug body 1.

Furthermore, as an alternative, with each of the above examples it may be possible to position the cordless electrical base 2 within the spaces 348a or 348b for transit.

In embodiments there may be provided separate or separable parts or additional mouldings 338, 343 or 344 that may act as either functional or cosmetic covers for the supports 330, 331. These may be for example provided as two separate parts 338 or one folding part 344 so that they fit within the appliance 1 or the space 348a or 348b for transit.

Alternatively the cover may be supplied as one part 343 and packaged either above or below the appliance in the gift box for transit as shown schematically in Figures 49q, 49r and 49s. It is expected that around 4mm would need to be added to the height of the box to accommodate the cover 343 being packaged either above or below the appliance position and this height may be reduced if the cross sectional profile of the cover 343 mirrored the cross sectional profile of the appliance 1 so that the two parts 'nest' or fit together. In the embodiment as illustrated in Figure 49s the aperture 349 in the cover 343 is larger than the top of the appliance, so that the cover 343 may sit over the appliance and there would be no requirement to increase the dimensions, volume or height of the gift box.

The two part cover assembly 338 may include click fit or assembly features 339, as shown in for example Figure 49n, and the folding cover 344 may include some form of hinge 342 which may be a living hinge formed as part of the moulding process in order that the user can assemble the parts prior to use.

The cover 338, 343, 344 may act as a support for the cordless base 2, and the cover 338, 343, 344 may provide full or partial support for the appliance 1. Each of the covers 338, 343, 344 are equally applicable to cordless bases with appliance supports 330, 331 (for example as illustrated in Figure 49m) and without appliance supports 330, 331 (for example as illustrated in Figure 49zaa).

The covers 338, 343 and 344 and/or the cordless electrical base 2 may include click fits 339 or alternatively other fixing means, for example, push fit, interference fit, friction fit, bayonets or threads so that the cover may be attached to the base 2.

In other embodiments the cover 343 may rest on the cordless electrical base 2 without locking or securing means.

Each of the fixing means may be multi use so that the covers 338, 343 and 344 are removably secured to the cordless electrical base 2 so that for example when the cover 343 is removed from the cordless electrical base 2, the complete appliance can be repackaged if required.

Alternatively the cover may be removed for cleaning, which is a particular advantage for appliances where the liquid to be heated can easily boil over, for example milk or soup.

In alternative embodiments this fixing means may be a one-time fit so that once installed the covers 338, 343 and 344 are permanently fixed to the cordless electrical base 2.

The cordless electrical base 2 may be assembled into the cover 343 from above or from below. The assembly between the cordless electrical base 2 and the cover 343 may take place after the power cable 13 has been attached.

Advantageously additional interchangeable covers 338, 343 and 344 may be provided in, for example, different colours, shapes and or materials so that the end user may choose whichever cover option is most suitable for the ambient surroundings.

The cover may be provided in various shapes and designs, for example, as illustrated in Figures 49y, 49z and 49za the form of the cover 343 includes three extension parts that extend downwardly and may sit level with the work surface.

As illustrated in Figure 49za the concave internal surface of the cover 343 matches the convex external surface of the appliance base moulding 6 so that base moulding 6 nests or fits within cover 343 in the stowed position for packaging, for example as previously described.

In further embodiments, the previously described removable lid or hinged lid assembly 150 may be transported within the vessel body to reduce the height and volume of the gift box.

The covers 338, 343 and 344 may include features to assist with cable storage in use. Figures 49zaa and 49zab show a one piece cover 343 with at least one, for example, 'L' shaped cable anchor feature 353 moulded as part of the cover 343, around which the cable 336 can be looped if the user wishes to partially or completely stow or store the cable 336. The cable anchor feature 353 may project inwardly or downwardly from the internal wall of the cover 343. The horizontal portions of the features 353 act to secure the cable 336 and may, as illustrated, face towards the periphery or alternatively may face towards the centre. In further embodiments they may be, for example, T shaped in cross section and therefore the horizontal portions may face in both directions. The features 353 may also act to secure the cover 343 to the cordless electrical base 2.

Figures 49zac and 49zad show an alternative embodiment where the features 353 act to secure the cable 336 by for example 'trapping' the cable 336 between adjacent parallel features 353 when, for example, the user wraps the cable 336 around the cordless electrical base 2. The features 353 may be moulded as shown or alternatively, for example, the feature 353 may be elongated and formed so that they follow the curvature of the base 2 and cover 343.

Figures 49zaa to 49zad shows the cable storage means arranged in a radial configuration.

It is not expected that the features 353 or other assembly features 339 will impede the stowing of a two piece or folding cover 338, 344 in transit, however consideration may need to be taken to ensure the features 353, 339 do not impede the stowing of the single piece base 343 above or below the appliance. For example, if stowed below the appliance, then corresponding recesses or apertures (not shown) may need to be provided in the base part of the appliance 1 so that the cordless electrical base 2 will nest closely against the appliance.

In alternative embodiments, as previously described, the base 2 may include cable storage features 340. As shown in Figures 49zae to 49zai, the cable storage features 340 may project from the projecting radially outwards from the central portion 2.

Figures 49zae to 49zap show further embodiments of cable storage features. As illustrated each of the embodiments show the cordless electrical base 2 being inserted into a one piece cover 343 from above, however each of the cable storage features are equally applicable to embodiments where the cordless electrical base 2 is inserted into the cover 343 from below and equally applicable to removable cover mouldings of different types and design.

Each of the cordless electrical base 2 embodiments include three feet 345, a single drainage aperture 346, appliance plug pin securing features 352 and is designed for use with the Otter CS7 cordless connector however these are for illustration purposes only and are not limiting to the invention.

Figures 49zae to 49zai illustrate further embodiments in which the cordless electrical base 2 incorporates a single cable retention feature 340 positioned substantially below the portion in which the cable 336 enters the cordless electrical base 2. Advantageously this allows the plug 337, cable 336 and cable retention feature 340 to be threaded through the aperture 349 of the cover 343.

As previously described the cordless electrical base 2 may be supported by the cover 343 and may include click fits or other securing means 339 and may include at least one support or foot 345.

Advantageously, by including the securing means 339 and cable retention features 340 in the cordless electrical base 2, then the cover 343 may have a less complex form and may take less space for stowing adjacent to the appliance.

Figures 49zaj to 49zak illustrate further embodiments of cable storage features in which the cordless electrical base 2 incorporates one cable retention feature 340 (as previously described) and at least one second cable retention feature 351 which may be in a form of a recess in the cordless electrical base 2 and may be diagonally opposite the feature 340. Advantageously the recess 351 provides an additional cable retention feature without increasing the overall size of the cordless electrical base 2, so that the cordless electrical base 2 may be installed through the cover 343 as previously described.

In further embodiments there may be provided more than one recess 351 and/or there may be a radial recess 351 in the cordless electrical base 2 for stowing the cable 336, and in this case the cable retention feature 340 may not be required.

Figure 49zal illustrates a cross section of an embodiment with more than one recess 351 and/or a radial recess 351 where the outer diameter of the cordless electrical base 2 has been increased enabling an additional length of cable 336 to be stowed around the cordless electrical base 2.

Advantageously, with any of the described two part base assemblies it may be possible to configure the components so that the cordless electrical base 2 may rotate with respect to the cover 343, 338, or 344. Figure 49zam illustrates a cross section in which the cable 336 may be wound in or wound out by rotating the cordless electrical base 2 about the cover 343, 338, or 344 as shown by reference 354.

In further embodiments (not shown), either the cordless electrical base 2 or the cover 343, 338, or 344 may be provided with a grip or profile to aid the user in the winding process.

In further embodiments (not shown) the cable 336 be may be unwound by pulling the cable 336 away from the cordless electrical base 2 and there may be provided some form of spring return and locking mechanism so the cable 336 will retract into the cordless electrical base 2 when the locking mechanism is released. In alternative embodiments the locking means may take the form of a ratchet or other mechanism so the cable may be maintained at variable lengths to suit the particular requirements of the user.

Figures 49zan to 49zao illustrates a further embodiment in which the cordless electrical base 2 incorporates at least one previously described cable retention feature 340 and the cover 343 incorporates at least one previously described 'L' or 'T' shaped cross section cable storage feature 353. moulded as part of the cover 343

In all embodiments where the cordless electrical base 2 is circular then the maximum outer diameter of the cordless electrical base 2 will be conditional upon the dimensions of the aperture 350 and the internal dimensions and available space within the appliance 1. Figure 49zap illustrates a further embodiment in which the cordless electrical base 2, in plan view, is narrowed in one direction, for example in the form of an oval, with a corresponding aperture 349 in the cover 343. This arrangement is particularly advantageous in the case that the aperture 350 in the appliance cordless electrical base 2 is not wide enough to accept a fully circular cordless electrical base 2 when stowing within the appliance 1. As illustrated in Figure 49zap the cordless electrical base 2 incorporates two cable retention features 340 however any of the previously described cable retention features may be employed. In further embodiments the cordless electrical base 2 may be configured in other shapes to achieve the same result, for example egg shaped.

In embodiments such as illustrated in Figure 49l the aperture 349 may interface with the perimeter of the cordless electrical base 2 and in other embodiments such as illustrated in Figure 49m the aperture may interface with the connector 4 or some other profile or detail, not shown, on the surface of the base 2. Figures 49l and 49m further illustrate the cover 343 being arranged to cover the central portion 2 and/or the at least one support member 331.

Alternatively the covers 338, 343 and 344 may just be placed over the cordless electrical base 2 or connector 4 without any fixture, so that they can more easily be removed for cleaning.

In alternative embodiments the cover 343 and cordless electrical base 2 may be supplied partially installed so that the user understands that the cover 343 and cordless electrical base 2 need to be attached before use. For example the plug 337 and part of the cable 336 may be threaded through the aperture 349 in the cover 343 so that cordless electrical base 2 and part of the cable 336 may be packaged within the appliance. The cable 336 may then communicate through, for example, through the spout, so that the remainder of the cable 336, along with the cover 343 and the plug 337, may be packaged outside the appliance 1.

Figure 49zai shows a cross section of the embodiment with the cable 336 stowed and secured.

Consideration may be made to ensure that the cordless electrical base 2 includes feet 345 or other support means so that the cordless electrical base 2 sits at the correct height above the work surface irrespective of whether the cover 338, 343 or 344 is fitted.

Where it is likely that the covers may be removed and, for some reason not refitted, or not fitted in the first place then consideration may be made in the interface between the cordless electrical base 2 and the appliance 1 so that the plug 3 and socket 4 always mate sufficiently and the correct electrical and mechanical connections are achieved.

Alternatively the cordless electrical base 2 may be provided with features for example downwardly extending projections (not shown) that prevent the cordless electrical base 2 sitting upright on the worktop unless the cover 343 is fitted, so that the cordless electrical base 2 is unstable and the user is aware that assembly is incomplete.

It is evident that the full scope and combination of embodiments is extensive; however it is envisaged that the skilled person, having read the description herein, will be able to transfer solutions between the embodiments to meet the specific problems of individual appliances within the scope of the present invention.

### Alternative Embodiments

The embodiments described above are illustrative of rather than limiting to the present invention. Alternative embodiments apparent on reading the above description may nevertheless fall within the scope of the invention.

## Claims

1. A cordless base assembly for a cordless electrical appliance, the assembly comprising a central portion (2) comprising a 360° cordless electrical connector and an electrical cable (336) connected thereto, and a separate or separable portion (338; 343; 344) respectively securable or secured to the central portion (2), **characterised in that** the separate or separable portion (338; 343; 344) has an aperture (349) that interfaces with the perimeter of the central portion (2) such that the 360° cordless electrical connector is able to cooperate with a corresponding cordless electrical connector in the appliance.

2. The assembly of claim 1, wherein the separate or separable portion (338; 343; 344) is permanently secured to the central portion (2).

3. The assembly of any one of claims 1 to 2, wherein the separate or separable portion (338; 343; 344) is respectively securable or secured to the central portion (2) by assembly means, for example push fit, interference fit, click-fittings (339), friction fittings, bayonet fittings and/or threads.

4. The assembly of claim 1 to 3, wherein the separate or separable portion (338) has a deployed configuration and/or a stowed configuration prior to being securable or secured to the central portion, and optionally the separate or separable portion comprises a hinge (342), or is separated or separable into discrete parts.

5. The assembly of any one of claims 1 to 4, wherein at least one electrical cable storage means (340) is provided for enabling electrical cable (336) to be wound onto and/or unwound from the central portion (2) and/or separate or separable portion (338; 343; 344).

6. The assembly of claim 5, wherein the electrical cable storage means (340) comprises:
at least one portion (340) projecting radially outwards from the central portion (2), wherein the at least one portion may have at least one aperture (352) for receiving at least one pin (356) of a plug (337), and/or
a recess provided in the central portion (2), wherein the recess may be a radial recess or a cut-out provided in the central portion (2), and/or
at least two portions (353) projecting inwardly or downwardly from the internal wall of the separate or separable portion (338; 343; 344), and/or
the electrical cable storage means are provided on both the central portion (2) and the separate or separable portion (338; 343; 344), and/or
the electrical cable storage means (340) are arranged in a radial configuration, and/or optionally the electrical cable (336) is wound and/or secured around or to the at least one electrical cable storage means (340).

7. The assembly of any one of claims 1 to 6, wherein the central portion (2) is arranged to be unstable on a surface when the separate or separable portion (338; 343; 344) is not attached to the central portion (2), wherein the central portion (2) may have at least one projection extending downwardly so as make the central portion (2) unstable on the surface when the separate or separable portion (338; 343; 344) is not attached to the central portion (2), and/or the central portion (2) may provide correct electrical and mechanical connections when the separate or separable portion (338; 343; 344) is not attached to the central portion (2).

8. The assembly of any one of claims 1 to 7, wherein the central portion (2) is rotatable with respect to the separate or separable portion (338; 343; 344), preferably for winding and/or unwinding the electrical cable (336) and optionally a grip or profile is provided on the central portion (2) and/or separate or separable portion (338; 343; 344) for rotating the central portion (2) with respect to the separate or separable portion (338; 343; 344).

9. The assembly of any one of claims 1 to 8, wherein the separate or separable portion (338; 343; 344) comprises one or more interchangeable covers.

10. A cordless electrical appliance (1) including the cordless base assembly of any preceding claim.

11. The appliance (1) of claim 10, wherein the central portion (2) is storable or stored within said cordless electrical appliance (1).

12. The appliance of claim 10 or 11, each when dependent on claim 4, wherein the separate or separable portion (338) is storable within the cordless electrical appliance (1) in the stowed configuration, or the separate or separable portion is positionable externally of the cordless electrical appliance (1) during packaging, so as not to substantially increase the dimensions or volume thereof.

13. The appliance (1) of any one of claims 10 to 12, wherein the separate or separable portion (338; 343; 344) acts to support or partially support the cordless electrical appliance (1) during use, or the separate or separable portion (338;343; 344) does not support the cordless electrical appliance (1).

14. The appliance (1) of any one of claims 10 to 13, comprising a kettle.

## Patentansprüche

1. Kabellose Basisanordnung für ein kabelloses Elektrogerät, wobei die Anordnung ein Mittelteil (2), das einen 360° kabellosen elektrischen Verbinder und ein daran angeschlossenes Elektrokabel (336) aufweist, und ein am Mittelteil (2) jeweils festhaltbares oder festgehaltenes getrenntes oder trennbares Teil (338; 343; 344) aufweist, **dadurch gekennzeichnet, dass** das getrennte oder trennbare Teil (338; 343; 344) eine Öffnung (349) hat, die mit dem Umfang des Mittelteils (2) anschließt, so dass der 360° kabellose elektrische Verbinder in der Lage ist, mit einem entsprechenden kabellosen elektrischen Verbinder im Gerät zusammenzuwirken.

2. Anordnung nach Anspruch 1, wobei das getrennte oder trennbare Teil (338; 343; 344) permanent am Mittelteil (2) festgehalten wird.

3. Anordnung nach einem der Ansprüche 1 bis 2, wobei das getrennte oder trennbare Teil (338; 343; 344) am Mittelteil (2) durch Verbindungsmittel, zum Beispiel Steckverbindung, Presspassung, Einrastvorrichtungen (339), Reibpassungen, Bajonettfassungen und/oder Gewinden, jeweils festhaltbar ist oder festgehalten wird.

4. Anordnung nach Anspruch 1 bis 3, wobei das getrennte oder trennbare Teil (338) eine entfaltete Konfiguration und/oder eine verstaute Konfiguration hat, bevor es am Mittelteil festhaltbar ist oder festgehalten wird, und optional das getrennte oder trennbare Teil ein Drehgelenk (342) aufweist oder in getrennte Teile getrennt wird oder trennbar ist.

5. Anordnung nach einem der Ansprüche 1 bis 4, wobei mindestens ein Elektrokabel-Aufbewahrungsmittel (340) vorgesehen ist, um zu ermöglichen, dass Elektrokabel (336) auf das Mittelteil (2) und/oder das getrennte oder trennbare Teil (338; 343; 344) aufgewickelt wird und/oder von dem Mittelteil (2) und/oder dem getrennten oder trennbaren Teil (338; 343; 344) abgewickelt wird.

6. Anordnung nach Anspruch 5, wobei das Elektrokabel-Aufbewahrungsmittel (340) Folgendes ausweist:
mindestens ein radial nach außen vom Mittelteil (2) vorstehendes Teil (340), wobei das mindestens eine Teil mindestens eine Öffnung (352) zum Aufnehmen von mindesten einem Anschlussstift (356) eines Steckers (337) haben kann, und/oder
eine im Mittelteil (2) vorgesehene Aussparung, wobei die Aussparung eine radiale Aussparung oder ein im Mittelteil (2) vorgesehener Ausschnitt sein kann, und/oder
mindestens zwei nach innen oder nach unten von der Innenwand des getrennten oder trennbaren Teils (338; 343; 344) vorstehende Teile (353), und/oder
die Elektrokabel-Aufbewahrungsmittel sowohl am Mittelteil (2) als auch am getrennten oder trennbaren Teil (338; 343; 344) vorgesehen sind, und/oder
die Elektrokabel-Aufbewahrungsmittel (340) in einer radialen Konfiguration angeordnet sind, und/oder optional das Elektrokabel (336) um das mindestens eine oder am mindestens einen das Elektrokabel-Aufbewahrungsmittel (340) gewickelt und/oder festgehalten wird.

7. Anordnung nach einem der Ansprüche 1 bis 6, wobei das Mittelteil (2) angeordnet ist, um auf einer Oberfläche unstabil zu sein, wenn das getrennte oder trennbare Teil (338; 343; 344) nicht am Mittelteil (2) angebracht ist, wobei das Mittelteil (2) mindestens einen sich nach unten erstreckenden Vorsprung haben kann, damit das Mittelteil (2) auf der Oberfläche unstabil ist, wenn das getrennte oder trennbare Teil (338; 343; 344) nicht am Mittelteil (2) angebracht ist, und/oder das Mittelteil (2) ordnungsgemäße elektrische und mechanische Verbindungen bereitstellen kann, wenn das getrennte oder trennbare Teil (338; 343; 344) nicht am Mittelteil (2) angebracht ist.

8. Anordnung nach einem der Ansprüche 1 bis 7, wobei das Mittelteil (2) in Bezug auf das getrennte oder trennbare Teil (338; 343; 344) drehbar ist, vorzugsweise zum Aufwickeln und/oder Abwickeln des Elektrokabels (336), und optional ein Griff oder Profil am Mittelteil (2) und/oder getrennten oder trennbaren Teil (338; 343; 344) zum Drehen des Mittelteils (2) in Bezug auf das getrennte oder trennbare Teil (338; 343; 344) vorgesehen ist.

9. Anordnung nach einem der Ansprüche 1 bis 8, wobei das getrennte oder trennbare Teil (338; 343; 344) eine oder mehrere austauschbare Abdeckungen aufweist.

10. Kabelloses Elektrogerät (1), umfassend die kabellose Basisanordnung nach einem der vorhergehenden Ansprüche.

11. Gerät (1) nach Anspruch 10, wobei das Mittelteil (2) innerhalb des kabellosen Elektrogeräts (1) aufbewahrbar ist oder aufbewahrt wird.

12. Gerät nach Anspruch 10 oder 11, jeweils rückbezogen auf Ansprüch 4, wobei das getrennte oder Trennbare Teil (338) innerhalb des kabellosen Elektrogeräts (1) in der verstauten Konfiguration aufbewahrbar ist, oder das getrennte oder trennbare Teil außerhalb des kabellosen Elektrogeräts (1) während des Verpackens positionierbar ist, um die Abmessungen oder das Volumen davon nicht erheblich zu vergrößern.

13. Gerät (1) nach einem der Ansprüche 10 bis 12, wobei das getrennte oder trennbare Teil (338; 343; 344) dazu dient, das kabellose Elektrogerät (1) während der Benutzung abzustützen oder teilweise abzustützen, oder das getrennte oder trennbare Teil (338;343; 344) das kabellose Elektrogerät (1) nicht abstützt.

14. Gerät (1) nach einem der Ansprüche 10 bis 13, ferner, aufweisend einen Kessel.

## Revendications

1. Socle sans fil pour un appareil électrique sans fil, le socle comprenant une partie centrale (2) comprenant un connecteur électrique sans fil de 360° et un câble électrique (336) connecté sur celui-ci, et une partie séparée ou séparable (338; 343; 344) fixable ou fixée respectivement sur la partie centrale (2), **caractérisé en ce que** la partie séparée ou séparable (338; 343; 344) présente une ouverture (349) formant une interface avec le pourtour de la partie centrale (2) de sorte que le connecteur électrique sans fil de 360° soit en mesure de coopérer avec un connecteur électrique sans fil correspondant dans l'appareil.

2. Ensemble selon la revendication 1, la partie séparée ou séparable (338; 343; 344) étant fixée en permanence sur la partie centrale (2).

3. Ensemble selon une quelconque des revendications 1 à 2, la partie séparée ou séparable (338; 343; 344) étant fixable ou fixée respectivement sur la partie centrale (2) par un dispositif d'assemblage, par exemple des assemblages par emboîtement, par ajustement serré, par enclenchement (339), à friction, à baïonnette et/ou fileté.

4. Ensemble selon une des revendications 1 à 3, la partie séparée ou séparable (338) présentant une configuration déployée et/ou une configuration rétractée avant d'être fixable ou fixée sur la partie centrale, et en option la partie séparée ou séparable comprenant une charnière (342), ou étant séparée ou séparable en parties discrètes.

5. Ensemble selon une quelconque des revendications 1 à 4, au moins un dispositif de rangement de câble électrique (340) étant prévu pour permettre l'enroulement d'un câble électrique (336) et/ou son déroulement de la partie centrale (2) et/ou de la partie séparée ou séparable (338; 343; 344).

6. Ensemble selon la revendication 5, le dispositif de rangement de câble électrique (340) comprenant :
au moins une partie (340) saillante radialement de la partie centrale (2) vers l'extérieur, l'au moins une partie pouvant posséder au moins une ouverture (352) pour recevoir au moins une broche (356) d'une fiche (337), et/ou
un évidement pratiqué dans la partie centrale (2), l'évidement pouvant être un évidement radial ou une encoche pratiqué dans la partie centrale (2), et/ou
au moins deux parties (353) saillantes de la paroi interne de la partie séparée ou séparable (338; 343; 344) vers l'intérieur ou vers l'extérieur, et/ou
le dispositif de rangement de câble électrique étant pratiqué à la fois sur la partie centrale (2) et la partie séparée ou séparable (338; 343; 344), et/ou
le dispositif de rangement de câble électrique (340) étant agencé dans une configuration radiale, et/ou le câble électrique (336) étant, en option, enroulé et/ou fixé autour de l'au moins un dispositif de rangement de câble électrique (340), ou sur celui-ci.

7. Ensemble selon une quelconque des revendications 1 à 6, la partie centrale (2) étant disposée pour être instable sur une surface lorsque la partie séparée ou séparable (338; 343; 344) n'est pas fixée sur la partie centrale (2), la partie centrale (2) pouvant présenter au moins une saillie s'étendant vers le bas de façon à déstabiliser la partie centrale (2) sur la surface lorsque la partie séparée ou séparable (338; 343; 344) n'est pas fixée sur la partie centrale (2), et/ou la partie centrale (2) peut assurer des connexions électriques et des raccordements mécaniques corrects lorsque la partie séparée ou séparable (338; 343; 344) n'est pas fixée sur la partie centrale (2).

8. Ensemble selon une quelconque des revendications 1 à 7, la partie centrale (2) pouvant tourner relativement à la partie séparée ou séparable (338; 343; 344), de préférence pour enrouler et/ou dérouler le câble électrique (336) et, en option, une poignée ou un profil étant pratiqués sur la partie centrale (2) et/ou une partie séparée ou séparable (338; 343; 344) pour la rotation de la partie centrale (2) relativement à la partie séparée ou séparable (338; 343; 344).

9. Ensemble selon une quelconque des revendications 1 à 8, la partie séparée ou séparable (338; 343; 344) comprenant un ou plusieurs couvercles interchangeables.

10. Appareil électrique sans fil (1) comprenant le socle sans fil selon une quelconque des revendications précédentes.

11. Appareil (1) selon la revendication 10, la partie centrale (2) étant rangée ou pouvant être rangée dans ledit appareil électrique sans fil (1).

12. Appareil selon la revendication 10 ou 11, chacune étant tributaire de la revendication 4, la partie séparée ou séparable (338) pouvant être rangée dans l'appareil électrique sans fil (1) de la configuration rangée, ou la partie séparée ou séparable pouvant être positionnée à l'extérieur de l'appareil électrique sans fil (1) au cours de l'emballage de façon à ne pas en augmenter substantiellement les dimensions ou le volume.

13. Appareil (1) selon une quelconque des revendications 10 à 12, la partie séparée ou séparable (338; 343; 344) agissant pour soutenir ou soutenir partiellement l'appareil électrique sans fil (1) en cours d'usage, ou la partie séparée ou séparable (338; 343; 344) ne supportant pas l'appareil électrique sans fil (1).

14. Appareil (1) selon une quelconque des revendications 10 à 13, comprenant une bouilloire.
